# EUROPEAN PATENT SPECIFICATION

(11) **EP 2 575 484 B1**
(45) Date of publication and mention of the grant of the patent: **09.07.2014**
(21) Application number: 11720457.8
(22) Date of filing: 17.05.2011
(51) Int. Cl.: A23B 7/10, A23L 1/212, A23L 1/22

(54) **Process for producing a pureed cinnamon composition**
Herstellung einer pürrierten Zusammensetzung mit Zimt
Procédé de production d'une composition de purée comprenant de la cannelle

(30) Priority: 28.05.2010 EP 10164267
(43) Date of publication of application: 10.04.2013
(73) Proprietor: Unilever N.V., 3013 AL Rotterdam (NL); Unilever PLC, London, Greater London EC4Y 0DY (GB)
(72) Inventor: MELWITZ, Dieter,Werner, 74074 Heilbronn (DE); SPRAUL, Martin, Helmut, 74074 Heilbronn (DE)
(74) Representative: Fijnvandraat, Arnoldus
(86) International application number: PCT/EP2011/057977
(87) International publication number: WO 2011/147718

(56) References cited:
- WO-A1-2010/060778
- US-A1- 2004 081 741
- US-A1- 2005 089 620
- US-A1- 2006 115 564
- US-A1- 2007 172 572
- DATABASE GNPD [Online] Mintel; 1 March 2006 (2006-03-01), Anonymous: "Calcutta Masala Simmer Sauce", XP002642216, retrieved from www.gnpd.com Database accession no. 10255828
- Anonymous: "Marinaden zum Grillgut einlegen gesucht", , 3 June 2004 (2004-06-03), pages 1-9, XP002596642, Retrieved from the Internet: URL:http://www.chefkoch.de/forum/2,21,8371 8/Marinaden-zum-Grillgut-einlegen-gesucht. html [retrieved on 2010-08-16]
- DR JÜRGEN FISCHER: "Apfel- und Zitrusfasern mit ausgeprägtem Wasserbindungsvermögen - Gesund bei vollem Geschmack", INTERNET CITATION, 1 March 2001 (2001-03-01), pages 1-2, XP002586649, Retrieved from the Internet: URL:http://www.dei.de/food/-/article/58295 31/25667490?returnToFullPageURL =javascript:window.history.back() [retrieved on 2010-06-10]
- REDGWELL R J ET AL: "Dietary fibre as a versatile food component: an industrial perspective", MOLECULAR NUTRITION & FOOD RESEARCH, WILEY - VCH VERLAG, WEINHEIM, DE, vol. 49, no. 6, 28 February 2005 (2005-02-28), pages 421-535, XP002526163, ISSN: 1613-4125

## Description

### FIELD OF THE INVENTION

The present invention relates to a a process for preparing a pureed cinnamon composition which is water-continuous.

### BACKGROUND TO THE INVENTION

Cinnamon is a well known spice which is widely used in numerous dishes. Cinnamon can be used both in sweet dishes such as apple pie as well as in savoury dishes, like in the Indian kitchen. In a professional kitchen (restaurant, canteen, hospital, etcetera) there is always the challenge to be flexible in preparing hot dishes when the client orders this, as compared to not having too many dishes simmering to be flexible and thereby losing on freshness and flavour.

Dry cinnamon is often used in many dishes, however flavour development is often not as pronounced or rapid as often required. In a professional kitchen a chef often finishes dishes with spices, to serve a dish to the consumer which is attractive and smells and tastes very attractive. In such a case a spice has to deliver a nice flavour rapidly, and should attract attention from the chef and more importantly from the consumer, by spreading an attractive flavour. Moreover, as a chef is usually very busy in a kitchen, he/she does not have much time to marinate or pre-prepare dishes otherwise, in order to generate nice flavours. Therefore spices which can rapidly develop their flavour, without needing long preparation times are advantageous. In addition spices are also used for marinating vegetables and/or meat, and a composition containing the spices should be able to provide a nice and attractive flavour to the dish.

Presently, consumers favour products having a low fat content and a fresh and natural appearance. Preservatives should be natural, and the label of a food product should not contain artificial compounds, as the consumer dislikes these. On the other hand, some kind of preservation is required, as spices may be very dirty after harvest, meaning that they often have a high microbial load. Hence a composition should have a good microbiological stability, and hence should be safe upon use and consumption. Non pre-published patent application no. PCT/EP2009/064820 discloses compositions comprising pureed herbs, or vegetables or spices containing insoluble fibres and vegetable oil.

US 2004/0081741 A1 discloses a fruit pulp, comprising vegetable oil and a thickening agent which may be citrus fibre. The fibre may also be incorporated as ingredient in a fruit paste.

JP 2008-306989 A discloses a pasty food containing spices, for use in curries, and which may contain cinnamon.

WO 2009/102845 A2 discloses a dough for a cookie containing citrus fibre, cinnamon, and fish oil.

US 2009/0202700 A1 discloses snacks like chips containing fruit, wherein the fruit looses flavour when the snacks are baked at high temperature. The recipes for the snacks may contain cinnamon.

US 5,690,981 discloses a hydrogel which is made from dietary fibres, and which can be used in food products to replace carbohydrates, or proteins, or oil, in order to reduce caloric load of the product.

DATABASE GNPD [online], Mintel; 1 march 2006 (2006-03-01), Anonymus: Calcutta Masala Simmer Sauce", retrieved from www.gnpd.com, Database accession no. 10255828 discloses a simmer sauce comprising cinnamon.

"Marinaden zum Grillgut einlegen gesucht", 3 June 2004, pages 1-9, retrieved from URL:http://www.chefkoch.de/forum/2,21,83718/Marinaden-zum-Grillgut-einlegen-gesucht.html [retrieved on 2010-08-16] discloses a marinade comprising cinnamon.

### SUMMARY OF THE INVENTION

In spite of the compositions disclosed in the prior art, there is a need for compositions containing cinnamon, which have excellent flavour, a long shelf life, and that do not contain non-natural preservatives.

We have now determined that a water continuous composition comprising cinnamon, vegetable oil, and insoluble fibres can be prepared and used to deliver excellent flavour properties to dishes which are flavoured and/or seasoned and/or marinated with such a composition. This leads to a remarkably good taste and flavour profile in a water-continuous pureed composition that contains cinnamon, which is ambient stable and can be kept at ambient temperature for extended periods of time even after opening the packaging. The composition develops its flavour and taste in the final dish almost instantaneously upon addition, and is not too concentrated or heavy and therefore does not have a high risk of overdosing, thereby affecting the cooked dish. Moreover it does not need preservatives which can be regarded by the consumer as artificial or non-natural, such as sorbate, and other compounds having an e-number. The spice composition can be obtained by a process wherein the temperature does not exceed 30°C during the preparation of the composition. This has the advantage that flavours do not disappear in a heating step.

Accordingly the invention provides a method for preparation of a composition comprising cinnamon,
wherein the composition is a water-continuous, pureed composition;
wherein the concentration of cinnamon ranges from 0.4 to 20% by weight;
and wherein the composition comprises from 0.5 to 10% by weight of insoluble fibres, wherein the insoluble fibres comprise citrus fibres or wheat fibres,
and from 1 to 40% by weight of a vegetable oil
and has a pH of 2 to 4,
wherein the method comprises the steps of:
(i) mixing water, food-grade acid, and cinnamon in a high shear mixer, which also has a mincing, chopping or milling function,
(ii) adding all remaining ingredients and continuing homogenisation,
(iii) filling the obtained product into a container,
and wherein the temperature does not exceed 30 °C during the preparation of the composition.

### DETAILED DESCRIPTION OF THE INVENTION

All percentages, unless otherwise stated, refer to the percentage by weight. The abbreviation 'wt%' refers to '% by weight'.

The present invention relates to a method for preparation of a composition containing cinnamon, which is considered to be a spice. The compositions may also contain other spices, as well as vegetables and/or herbs. Herbs are defined in The Illustrated Herbal Handbook by J. de Bairacli Levy, Faber and Faber Ltd., London, chapter 3. Spices are defined in 'The Book of Spices', Livingstone Publ. Comp. 1969, p. 3. A vegetable is a plant that is cultivated for an edible part, such as the root of the beet, the leaf of spinach, or the flower buds of broccoli or cauliflower. Botanically speaking a vegetable may be the fruit body of a plant (e.g. bell peppers), but may also be the leaves of the plant (e.g. spinach).

The invention provides a method for preparation of a composition comprising cinnamon,
wherein the composition is a water-continuous, pureed composition;
wherein the concentration of cinnamon ranges from 0.4 to 20% by weight;
and wherein the composition comprises from 0.5 to 10% by weight of insoluble fibres, wherein the insoluble fibres comprise citrus fibres or wheat fibres,
and from 1 to 40% by weight of a vegetable oil
and has a pH of 2 to 4.

A pureed composition is interpreted to be a paste which does not contain big pieces of an ingredient, and wherein the ingredients form a smooth and homogeneous paste on the scale of the container in which the composition is kept. The major part of the composition may be a puree, additionally one ore more of the ingredients may be identifiable as separate pieces, for example as pieces having a size up to 5 millimetre. These could be for instance some herbs leaves, which may not be pureed, but chopped to a size of about a few millimetres. On microscale, the composition may be considered to be heterogeneous, as the composition may contain various other spices in addition to cinnamon, which may be present as discrete powder particles. Usually the ingredients will be grinded or homogenised or may have undergone any other process step in order to make a puree or paste.

The cinnamon that is used in the compositions preferably is dry cinnamon powder, grinded to a size of preferably between about 0.1 and about 0.8 millimetre. The source of the cinnamon preferably is the species *Cinnamomum verum* or *Cinnamomum cassia* or *Cinnamomum burmannii.* Preferably the essential oil content is between 1 and 3 millilitres per 100 gram, and the coumarin extent does preferably not exceed 7 gram per kilogram.

In a further preferred embodiment the composition comprises from 0.5% to 15% by weight of cinnamon. More preferred the composition comprises from 1% to 12% by weight of cinnamon, more preferred from 2 to 8% by weight of cinnamon, and most preferred from 3 to 7% by weight of cinnamon.

An element of the composition is the presence of insoluble fibres. By the words 'fibre', we mean any insoluble, particulate structure, wherein the ratio between the length and the diameter ranges from 5 to infinite. 'Insoluble' here means insoluble in water. Here, the diameter means the largest distance of the cross-section. Length and diameter are intended to mean the average length and diameter, as can be determined by (electron) microscopic analysis, atomic force microscopy or light-scattering.

The insoluble fibres comprise citrus fibres or wheat fibres. Wheat fibres may be derived from different parts of the wheat plant, like the seed, the hull of the seed, the stem, or the bran. The citrus fibres preferably originate from lemon, orange or lime, more specifically they preferably originate from the peel of the orange, lemon, or lime. The composition may additionally contain other insoluble fibres. The composition may contain a combination of citrus fibres and wheat fibres. Insoluble fibres suitable for use in this invention can be found, for example, in fruits, both citrus and non-citrus. Other sources of the insoluble fibres suitable for use in this invention are vegetables like legumes, and grains. Preferred insoluble fibres suitable for use in this invention can be recovered from tomatoes, peaches, pears, apples, plums, lemons, limes, oranges, grapefruits, potatoes, or mixtures thereof. Other preferred insoluble fibres suitable for use in this invention may be recovered from the hull fibres of peas, oats, barley, mustard, soy, wheat, or mixtures thereof. Preferably the insoluble fibres additionally comprise carbohydrates, such as microcrystalline cellulose, and onion fibres. The composition may also comprise lignin as insoluble fibre. Still other fibres which may be employed include those that are plant or root-derived as well as those which are wood-derived.

The compositions comprise from 0.5 to 10% by weight of insoluble fibres. Preferably the compositions contain maximally 8% by weight of insoluble fibre, more preferred maximally 6% by weight of insoluble fibre, based on total weight of the composition. Preferably the insoluble fibres are present at a concentration from 1% to 6% by weight, based on the total weight of the composition. More preferred the concentration of the insoluble fibre is between 1.5% and 6% by weight, most preferred between 2% and 5% by weight based on total weight of the composition.

Preferably the concentration of citrus fibres or wheat fibres or a combination of the two fibres is from 0.5 to 10% by weight. Preferably the compositions contain maximally 8% by weight of citrus fibre or wheat fibre or combination of citrus fibre and wheat fibre, more preferred maximally 6% by weight of citrus fibre or wheat fibre or combination of citrus fibre and wheat fibre, based on total weight of the composition. Preferably the citrus fibre or wheat fibre or combination of citrus fibre and wheat fibre are present at a concentration from 1% to 6% by weight, based on the total weight of the composition. More preferred the concentration of the citrus fibre or wheat fibre or combination of citrus fibre and wheat fibre is between 1.5% and 6% by weight, most preferred between 2% and 5% by weight based on total weight of the composition.

Preferably the compositions contain insoluble fibres which are added to the composition as isolated fibres. This means that the fibres have been isolated from a natural source, purified, and possibly other processes have been carried out, in order to give the fibres a good functionality in the compostions (with regard to providing for example a good structure of the composition, and aiding flavour release). Hence preferably the composition comprises isolated insoluble fibres.

Such insoluble fibres are commercially available from suppliers like J. Rettenmaier und Söhne GmbH+Co.KG (Rosenberg, Germany) under the Vitacel™ name and Herbstreith & Fox under the Herbacel™ name. A preferred type of citrus fibres is Citrus fibre Type N from Herbafoods (Werder (Havel), Germany). Fibres normally are all insoluble. A preferred type of wheat fibre is Vitacel, as supplied by J. Rettenmaier und Söhne GmbH+Co.KG (Rosenberg, Germany). Preferred oat fibres, potato fibres, apple fibres, orange fibres, tomato fibres, and microcrystalline cellulose are available under the brand name Vitacel, as supplied by J. Rettenmaier und Söhne GmbH+Co.KG (Rosenberg, Germany).

Preferably in the finished food products, the insoluble fibres have an average length of 25 to 400 micrometer, and preferably from about 50 to 185 microns, and most preferably, from about 100 to about 165 microns, including all ranges subsumed therein. The widths of such fibres are typically between about 3 to about 20 microns, and preferably, from about 5 to about 10 microns.

An element of the compositions is the presence of a vegetable oil. The oil content of the composition ranges from 1 to 40% by weight, based on the weight of the total composition. Preferably the composition comprises from 1 to 15% by weight of a vegetable oil, based on the weight of the total composition. In another preferred embodiment, the composition comprises from 15 to 40% by weight of a vegetable oil, based on the weight of the total composition. Other preferred oil contents of the composition according to the invention are 1 to 25% by weight, or 5 to 15% by weight, or 15 to 35% by weight, or 15 to 30% by weight, or 15 to 25% by weight, based on the weight of the total composition. The presence of a vegetable oil is important to guarantee the quality of the food product, such as colour and consistency, and also other sensory properties are positively influenced, like flavour release while preparing the dish with the spice composition, as well as flavour release when opening a receptacle containing the composition according to the invention. The vegetable oil preferably is selected from the group consisting of sunflower oil, high oleic sunflower oil, safflower oil, high oleic safflower oil, soybean oil, maize oil, cotton seed oil, arachidic oil, olein-fractions of natural oils, such as palm oil olein, MCT - oils. Preferred vegetable oils are palm oil, maize oil, olive oil, and combinations thereof. The oil preferably displays a solid fat content (NMR-pulse, not-stab.) of less than 10% at 20°C.

The compositions have a pH of 2 to 4, preferably 3 to 4, preferably 2.5 to 4, preferably 2.5 to 3.8, preferably 3.2 to 3.8. The pH can be adjusted using any suitable food-grade acid, preferably selected from citric acid, acetic acid, lactic acid, malic acid, gluconic acid, and mixtures thereof. The source of the acid is preferably natural, e.g. vinegar, lemon or lime juice. Preferably the acid is obtained by a fermentation process. The pKa value of the acid preferably is lower than 5, more preferred lower than 4.8.

Additionally preferably the composition comprises one or more other spices, and/or one or more herbs, and/or one or more vegetables. Preferred herbs are selected from the group consisting of sage, rosemary, basil, thyme, oregano, dill, parsley, garlic, onion, shallots, savoury, marjoram, tarragon, lavender, coriander, kafir lime, chervil, bear's garlic, lemon grass, red/green/yellow pepper, dried chillies, fresh chillies, beet root, ginger, tomato, lemon, star anise and mixtures thereof known as Provencal and Italian. The optional additional spices preferably are selected from the group consisting of black, green, red and white pepper, nutmeg, mace, curry, curcuma, saffron, clove and mixtures thereof. Another preferred spice is vanilla. Preferably, the herbs as used in the present invention are green herbs. Examples of useful vegetables are onion, paprika.

The size of the raw herbs, spices and/or vegetables prior to the production method, preferably ranges from 0.5 to 25 mm, depending on the raw material used. For example for basil the raw material may range from 0.8 to 5 mm, for tarragon it may range from 1 to 20 mm, and for other herbs or vegetables other ranges may be acceptable: The herbs, spices, and/or vegetables are preferably ground to a fine size prior to mixing with other ingredients of the composition of the present invention or while preparing the present compositions of the invention. The average size of the herbs, spices, and/or vegetables after grinding and as used in the composition of the invention preferably ranges between 0.01 and 5 millimetre (weight average diameter), more preferably between 0.05 and 4 millimetres, most preferred at maximum 3 millimetres. Preferably the composition has a homogeneous and smooth constitution.

The total amount of herbs, vegetables and/or spices in the compositions preferably ranges from 1 to 60% by weight, preferably 3 to 60% by weight, preferably 5 to 60% by weight, more preferably 5 to 40% by weight, most preferably 7 to 40% by weight. Especially for spices; the total amount of spices preferably is between 1 and 40% by weight, preferably between 2 and 25% by weight.

Preferably, the compositions are essentially free from non-natural preservatives. Due to the natural preservation system of the composition and the preparation method of the composition preferably non-natural preservatives are not required in order for the composition to have a long shelf-life. Non-natural preservatives in the context of the present invention are compounds which can be regarded to be artificial or non-natural by many consumers. Examples of these are compounds that are qualified in Europe as food additives that have an e-number. Non-limiting examples of these are the compounds classified as preservatives and having the e-numbers: E200 sorbic acid; E202 potassium sorbate; E203 calcium sorbate; E210 benzoic acid; E211 sodium benzoate; E212 potassium benzoate; E213 calcium benzoate; E214 ethyl p-hydroxybenzoate; E215 sodium ethyl p-hydroxybenzoate; E216 propyl p-hydroxybenzoate; E217 sodium propyl p-hydroxybenzoate; E218 methyl p-hydroxybenzoate; E219 sodium methyl p-hydroxybenzoate; E220 sulphur dioxide; E221 sodium sulphite; E222 sodium hydrogen sulphite; E223 sodium metabisulphite; E224 potassium metabisulphite; E226 calcium sulphite; E227 calcium hydrogen sulphite; E228 potassium hydrogen sulphite; E230 biphenyl, diphenyl; E231 orthophenyl phenol; E232 sodium orthophenyl phenol; E234 nisin; E235 natamycin; E239 hexamethylene tetramine; E242 dimethyl dicarbonate; E249 potassium nitrite; E250 sodium nitrite; E251 sodium nitrate; E252 potassium nitrate. Nevertheless, in spite of many consumers regarding preservatives as non-natural compounds, these compounds may be natural compounds.

The composition preferably comprises from 1 to 10% of an edible salt, preferably from 3 to 10%, more preferably from 3 to 9%. The most preferred edible salt is NaCl. The water content of the composition is preferably in general between 30 and 60% of the total composition. Preferably, the composition further comprises from 1 to 10%, preferably 3 to 7% of sugar.

The invention provides a method for preparation of a composition comprising cinnamon,
wherein the composition is a water-continuous, pureed composition;
wherein the concentration of cinnamon ranges from 0.4 to 20% by weight;
and wherein the composition comprises from 0.5 to 10% by weight of insoluble fibres,
wherein the insoluble fibres comprise citrus fibres or wheat fibres,
and from 1 to 40% by weight of a vegetable oil
and has a pH of 2 to 4,
wherein the method comprises the steps of:
(i) mixing water, food-grade acid, cinnamon in a high shear mixer, which also has a mincing, chopping or milling function,
(ii) adding all remaining ingredients and continuing homogenisation,
(iii) filling the obtained product into a container,
and wherein the temperature does not exceed 30 °C during the preparation of the composition.

In step (i) a food-grade acid such as vinegar, cinnamon, and optionally one or more other spices, and/or one or more herbs and/or one or more vegetables are mixed in a high shear mixer, which also has a mincing/ chopping or milling function, as known from any kind of puree or pulp preparation. In step (ii) other ingredients and optional ingredients are added to the mix of step (i) and homogenisation is continued. In step (iii) containers are filled with the obtained product. This step (iii) preferably is applied under aseptic conditions.

If necessary the oil is heated slightly, for example to 25-30°C before addition. The insoluble fibres may be added in step (i) to get even improved dispersion.

The optional herbs and/or vegetables and/or spices may be added to the mixture as deep-frozen products. The spices usually are applied as freeze-dried or dry, preferably finely ground products as normally used in the kitchen area. Best product quality is obtained, if the temperature applied during the preparation does not exceed 30°C.

The mixing according to this process can be performed by any conventional high shear mixing technique, e.g. a Moltomat, a Unimix, vertical cutter mixers, colloid mill, etc. This equipment applies high shear or high energy intensity to the material which activates the fibres and could be a
- high shear mixer being equipped with a rotor stator type of disperser (homogeniser) either internally in a batch or vessel set-up or within an external circulation in a bypath stream or
- a cutting device using for example rotating knifes e.g. a meat cutter or cutting systems as used in the puree and pulp preparation e.g. an Urschel Comitrol type of equipment.

The activation of the fibres is preferably done in order to improve the functionality of the fibres, with regard to providing for example a good structure of the composition, and aiding flavour release.

Preferably the temperature of the optional herbs and/or vegetables, and/or spices during the entire cycle from harvest until production of the composition remains below 50°C, preferably does not exceed 45°C, preferably does not exceed 40°C, and preferably not exceeds 30°C. More specifically during the preparation of the composition, the temperature applied does not exceed, 30°C.

The composition preferably is packed in a closed container which is impermeable for oxygen and/or UV light. This container can be stored at a temperature between 1°C and 35°C, preferably between 4°C and 35°C, preferably between 10°C and 30°C, most preferred at ambient temperature.

Due to the low temperature processing, the quality of the composition remains high, with only limited loss of colour, taste, flavour and other properties of the composition as compared to other compositions or purees which have undergone high temperature processing. Nevertheless, in spite of the relatively low temperature during the preparation process, the microbiological quality of the composition is retained at a high and safe level, due to using a combination of techniques to preserve the quality of the product. In spite of the composition containing finely ground cinnamon and optionally herbs, vegetables, and/or other spices, enzymes which may be released during the preparation process do not negatively deteriorate the quality of the composition.

The combination of acidity of the product, presence of insoluble fibres, low temperature processing, optional presence of salts, preferred packaging, and low temperature processing, and in spite of the absence of preservatives which can be regarded by the consumer as artificial or non-natural, the keepability and microbiological safety of the composition is very good, while retaining a high product quality as perceived by the cook and high ability to give taste and flavour to various dishes. One of the advantages of the cinnamon composition is that in spite of the pH between 2 and 4, the composition does not have a strong acid taste and smell. Hence the preservation properties of the acid may exhibit its function, while the composition does not have a strong acid taste. This makes the composition very suitable for use in sweet and creamy dishes, where the excellent flavour properties of the cinnamon can be observed very clearly and positively.

Examples of dishes potentially prepared with cinnamon puree are numerous, and only some non-limiting examples are moussaka; pho bo (Vietnamese beef and rice noodle soup); pineapple chutney; pumpkin pie raisin pie filling; apple pie; and cinnamon cookies.

Typical examples of spice mixes containing cinnamon are:
- five spices mix; containing for example among others szechuan pepper, fennel seed powder, ground clove, cinnamon, and star anise powder;
- tandoori puree, containing for example among others lemon grass, garlic, chilli, coriander cardamom, pepper, ginger, cumin, cinnamon, and nutmeg;
- ras el hanout (Moroccan spice blend), containing for example among others cumin, ginger, turmeric, salt, cinnamon, black and white pepper, and cayenne;
- (Jamaican) jerk seasoning, containing for example among others garlic, brown sugar, green onions, soy sauce, lime juice, orange juice, rum, bay leaves, ginger, cloves, nutmeg, cinnamon and black pepper;
- pumpkin pie spice, containing for example among others cinnamon, ginger, ground cloves, and nutmeg;
- old bay seasoning, containing for example among others mustard, paprika, celery seed, bay leaf, black and red pepper, cinnamon, cloves, nutmeg, cardamom, salt, and ginger;
- garam masala, containing for example among others black & white pepper, cloves, malibar leaves, long pepper (pippali), black cumin (shahi jeera), cumin seeds, cinnamon; black, brown, & green cardamom, nutmeg, star anise and coriander seeds.

### DESCRIPTION OF FIGURES

Figure 1: Concentration of volatile compounds in various cooking trials of example 3.
Figure 2: Concentration of volatile compounds (without coumarin and (E)-cinnamic aldehyde) in various cooking trials of example 3.

### EXAMPLES

The invention will now be further illustrated by means of the following non-limiting examples.

### Example 1: Cinnamon puree

Based on the ingredients in table 1 below, following process steps were carried out:
a) water, vinegar 12%, and cinnamon were filled into an Unimix homogenizer and were processed for 5 minutes at speed level 3;
b) after the first step, salt, sugar, maltodextrine, palm oil and citrus fibres were added and processed for 5 minutes at speed level 3, and then 15 min at speed level 2;
c) the final product was pumped to the filling line and filled in plastic jars to give a cinnamon puree.

The temperature during the process was room temperature, about 20 to 22°C.

**Table 1: Composition cinnamon puree**

| *Ingredient* | *concentration [wt%]* |
|---|---|
| Water | 44.8 |
| Maltodextrin | 12.3 |
| Salt (NaCl, non iodised) | 10.0 |
| Sugar (sucrose) | 8.0 |
| Palm oil (organic) | 7.2 |
| Cinnamon, ground | 6.8 |
| Vinegar 12 % | 6.6 |
| Citrus fibre Type N | 4.2 |
| Xanthan gum | 0.1 |

Raw materials information:
- citrus fibre: Herbacel Type N ex Herbafoods (Werder (Havel), Germany);
- vinegar12%: pasteurised, produced from pure ethylalcohol by acetic acid fermentation. Diluted with water to 12°; supplier Nutrex AG (Switzerland);
- cinnamon: bark of *Cinnamomum burmannii* (Cassia), which is dried, freshly ground and steam treated; supplier Fuchs GmbH & Co KG (Melle, Germany).

### Example 2: Examples of compositions containing cinnamon

**Table 2: Tandoori pureed composition comprising cinnamon**

| *Ingredient* | *concentration [wt%]* |
|---|---|
| Water | 43.4 |
| Maltodextrin | 11.4 |
| Salt (NaCl, non iodised) | 9.5 |
| Palm oil (organic) | 7.2 |
| Vinegar 12 % | 6.6 |
| Sugar | 6.0 |
| Citrus fibre Type N | 4.2 |
| Lemon grass pellets | 2.0 |
| Cloves of garlic, deep frozen | 2.0 |
| Chilli red frozen | 1.0 |
| Coriander seed | 1.0 |
| Cardamom | 1.0 |
| Pepper black | 1.0 |
| Ginger powder | 1.0 |
| Cumin | 0.6 |
| Mace | 0.6 |
| Bay leave | 0.6 |
| Cinnamon, ground | 0.5 |
| Nutmeg | 0.3 |
| Xanthan gum | 0.1 |

**Table 3: 5 spices pureed composition comprising cinnamon**

| *Ingredient* | *concentration [wt%]* |
|---|---|
| Water | 45.2 |
| Maltodextrin | 17.8 |
| Salt (NaCl, non iodised) | 9.2 |
| Palm oil (organic) | 7.0 |
| Vinegar 12% | 6.6 |
| Sugar | 5.6 |
| Citrus fibre Type N | 3.4 |
| Szechuan pepper | 1.6 |
| Fennel Seed AD powder steam treated | 1.3 |
| Clove ground steam treated | 1.0 |
| Cinnamon, ground | 0.7 |
| Star anise AD powder steam treated | 0.5 |
| Xanthan gum | 0.1 |

The quality and supplier of ingredients in these two spice mixes are the same as in example 1 (as far as they are used in example 1).

### Example 3: Use of cinnamon puree in hot dish and analysis of volatile flavour compounds

In order to determine the composition and generation of cinnamon flavours of a composition containing cinnamon according to the invention, the following cooking trials were performed, wherein generation of volatile flavour compounds of cinnamon was determined. Three trials were performed, which had the following set-up:
Trial 1: Marinate chicken meat with cinnamon powder, and cook the meat
Trial 2: Marinate chicken meat with cinnamon powder, cook the meat, and add other ingredients of cinnamon puree (as separate ingredients)
Trial 3: Cook chicken meat, add cinnamon puree (from example 1)

### Raw materials:

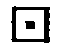 corn oil: Mazola (trade ware)
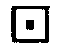 chicken meat (butcher's quality, freshly ordered - not frozen)
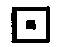 coconut milk: (trade ware)
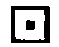 water, maltodextrin, salt, sugar, palm oil, cinnamon, vinegar 12 %, citrus fibre, xanthan gum: same raw materials as in example 1.

### Method for analysis of volatile flavour compounds

The development of volatile flavour compounds in the trials was followed by analysing volatile flavour compounds using stir bar sorptive extraction (SBSE) with Twister (supplied by Gerstel GmbH & Co. KG, Mülheim an der Ruhr, Germany). This technique is used for the extraction and analysis of volatile and semi-volatile organic compounds. The Twister looks like a conventional magnetic stirring rod. While it turns and stirs, it adsorbs the organic contents out of aqueous solutions onto its coating which consists of polydimethylsiloxane (PDMS). The Twister has a film thickness of 0.5 mm and length of 10 mm. After this quick and sensitive preparation step, the twister can be directly transferred to the thermodesorption unit (TDS). Thermodesorption is a multifunctional method for trapping volatile and semi-volatile compounds on an adsorbent as well as for direct thermal extraction of volatile substances from solids without sample preparation. The on-line coupled cooled injection system (CIS) acts as a liquid nitrogen cooled trap, focusing and concentrating the components to be determined, and then transferring them to the capillary column.
In combination with gas chromatography-mass spectrometry, the qualitative and quantitative composition of heterogeneous samples can be investigated. An inert gas flow provides continuous removal of the vapour phase of the investigated sample with subsequent adsorption of the solutes.

Flavours generated during the cooking trials were determined by the following method. Cooking sauce from each trial was separated from the cooked meat with a sieve. Meat was put back into the pan and 100g of water was added. Meat was shaken for 30 seconds in the water and liquid again separated from the meat. Sauce and washing water were combined. 15 g of this combined sauce were put into a measuring flask and filled with distilled water up to 100g in total. This was stir for 1 hour at 250 rpm. Solution was filtrated with S+S Faltenfilter 520 A½. 10ml of the filtrate was pipetted into a headspace vial, 1ml internal standard solution was added, a Twister was added (conditioned beforehand for 1.5h at 300°C and check for purity by GCMS) and the vial closed. Stirred with Twister for 1.5h at 970 rpm. Twister was taken out, cleaned with distilled water, dried with a lint-free wipe and put it into a TDS-tube for the analysis with TDS-GCMS.

### TDS/CIS:

TDS: sample remove, splitless, transfer temp. 200°C, initial temperature 30°C, initial time 0 min, delay time 0 min, first rate 60°C/min, first final temperature 150°C, first final time 10 min.
CIS: splitless, initial temperature -50°C, initial time 0.01 min, first rate 12°C/s, first final temperature 240°C, first final time 3 min.

### GC-MS:

GC: HP6890, solvent vent, vent time 0.01 min, vent flow 50ml/min, purge flow 40 ml/min, purge time 1.51 min., gas saver off, gas helium, constant flow 0.8 ml/min. Oven-temperature program: 35/2/4/240/30.
MS: HP5973; Transferline-T.280°C; ionization 70eV; E.I.-Mode; data acquisition and processing via HP-MS-ChemStation; Tune: Max.Sens.Autotune, Solvent Delay 4.00min., EM Offset +0, Scan 38-250, Threshold 75, Samples 2, HP-624 (60m; 0.25mm i.D.; Film 1.40 microns)

The result of the analysis is that the concentration of the volatile compounds is indicated in arbitrary units, as a comparison between the trials will be made, and not an absolute measurement of the concentration of volatile compounds. These volatile compounds can be attributed to flavour content and composition of cinnamon.

A detailed set-up of the three trials is given in the following table.

**Table 4: Set-up of three trials to test generation, content and composition of flavour of cinnamon**

| *time* | *Trial 1* | *Trial 2* | *Trial 3* |
|---|---|---|---|
| | Marinate 500 gram chicken meat* with 6.8 gram cinnamon powder | Marinate 500 gram chicken meat* with 6.8 gram cinnamon powder | |
| | Heat 50 gram corn oil to ~170°C | Heat 50 gram corn oil to ~170°C | Heat 50 gram corn oil to ~170°C |
| 0 min | Roast marinated chicken meat | Roast marinated chicken meat | Roast 500 gram chicken meat* |
| 3 min | add 300 gram coconut milk | add 300 gram coconut milk | add 300 gram coconut milk |
| 5 min | simmer at ~70°C for 10 minutes | add water, maltodextrin, salt, sugar, palm oil, vinegar 12 %, citrus fibre, xanthan gum (amounts same as in 100 gram cinnamon puree, see example 1) | add 100 gram cinnamon puree (from example 1, corresponding to 6.8 gram cinnamon) |
| | | simmer at ~70°C for 10 minutes | simmer at ~70°C for 10 minutes |
| 15 min | collect simmered sauce for analysis | | |
| 16 min | | collect simmered sauce for analysis | collect simmered sauce for analysis |

| | | | |
|---|---|---|---|
| * chicken meat cut in pieces of roughly 2x2x5 cm) | | | |

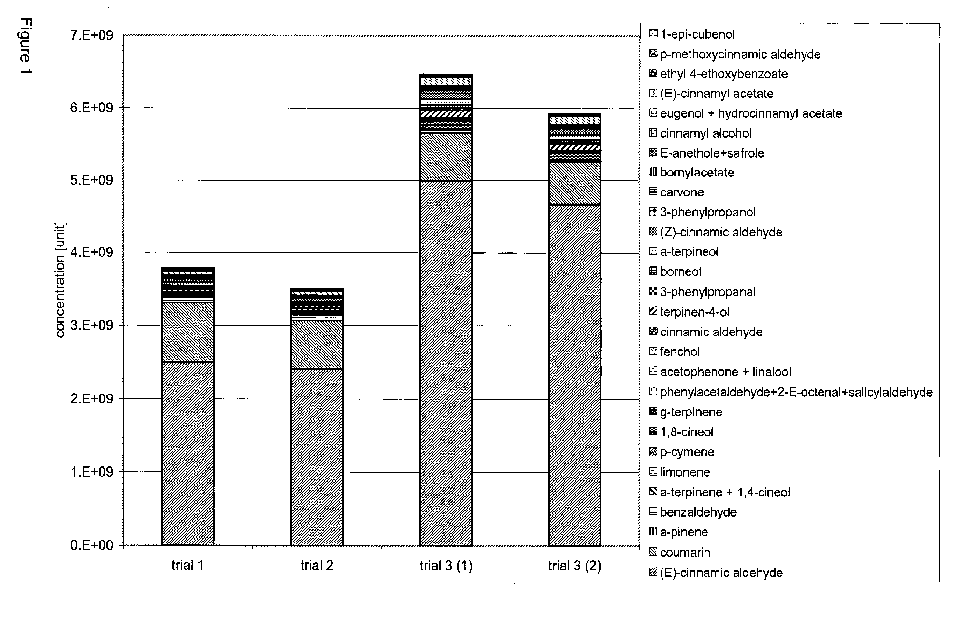

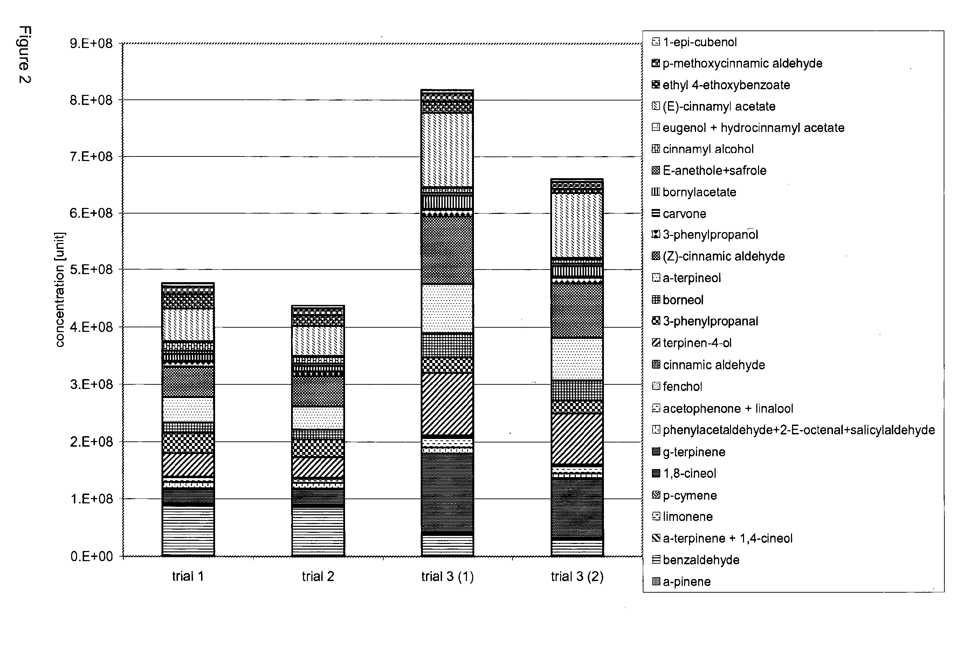

Trial 3 was done in duplicate, using the same raw materials and the same method, in order to determine reproducibility of the method. The sauces as obtained from the three trials were analysed according to the method indicated before. Results from analysis of the volatiles are given in the following table, and in figures 1 and 2.

**Table 5: Concentration of volatile compounds determined in sauces from trials 1, 2, and 3 (in duplicate)**

| | *Trial 1* | *Trial 2* | *Trial 3 (1)* | *Trial 3 (2) duplicate* |
|---|---|---|---|---|
| *Compound* | *conc. [unit]* | *conc. [unit]* | *conc. [unit]* | *conc. [unit]* |
| a-pinene | 4.74E+05 | 2.58E+05 | 6.78E+05 | 3.55E+05 |
| benzaldehyde | 8.82E+07 | 8.61E+07 | 3.67E+07 | 2.90E+07 |
| a-terpinene + 1,4-cineol | 7.91E+05 | 8.30E+05 | 7.15E+05 | 1.10E+06 |
| limonene | 1.03E+06 | 1.24E+06 | 1.47E+06 | 1.33E+06 |
| p-cymene | 7.70E+05 | 6.84E+05 | 1.27E+06 | 8.09E+05 |
| 1,8-cineol | 2.71E+07 | 2.92E+07 | 1.38E+08 | 1.03E+08 |
| g-terpinene | 3.94E+05 | 4.36E+05 | 8.38E+05 | 7.17E+05 |
| phenylacetaldehyde+2-E-octenal+salicylaldehyde | 1.16E+07 | 1.01E+07 | 1.04E+07 | 8.05E+06 |
| acetophenone + linalool | 8.00E+06 | 7.15E+06 | 1.67E+07 | 1.29E+07 |
| fenchol | 1.13E+06 | 8.94E+05 | 2.21E+06 | 1.84E+06 |
| cinnamic aldehyde | 3.21E+05 | 2.91E+05 | 2.03E+06 | 1.22E+06 |
| terpinen-4-ol | 4.11E+07 | 3.68E+07 | 1.09E+08 | 8.90E+07 |
| 3-phenylpropanal | 3.43E+07 | 3.07E+07 | 2.68E+07 | 2.24E+07 |
| borneol | 1.82E+07 | 1.66E+07 | 4.22E+07 | 3.50E+07 |
| a-terpineol | 4.49E+07 | 4.02E+07 | 8.63E+07 | 7.44E+07 |
| (Z)-cinnamic aldehyde | 5.25E+07 | 5.33E+07 | 1.18E+08 | 9.48E+07 |
| 3-phenylpropanol | 9.39E+06 | 7.30E+06 | 1.18E+07 | 1.02E+07 |
| carvone | 9.23E+05 | 8.61E+05 | 1.96E+06 | 1.64E+06 |
| bornylacetate | 1.17E+07 | 9.26E+06 | 2.31E+07 | 1.86E+07 |
| E-anethole+safrole | 5.63E+06 | 4.42E+06 | 5.06E+06 | 4.32E+06 |
| (E)-cinnamic aldehyde | 2.51E+09 | 2.41E+09 | 4.99E+09 | 4.67E+09 |
| cinnamyl alcohol | 1.52E+07 | 1.11E+07 | 8.58E+06 | 6.72E+06 |
| eugenol + hydrocinnamyl acetate | 1.93E+06 | 1.73E+06 | 2.36E+06 | 3.58E+06 |
| (E)-cinnamyl acetate | 5.67E+07 | 5.25E+07 | 1.31E+08 | 1.14E+08 |
| coumarin | 8.07E+08 | 6.60E+08 | 6.65E+08 | 5.85E+08 |
| ethyl 4-ethoxybenzoate | 2.53E+07 | 1.83E+07 | 2.02E+07 | 8.71 E+06 |
| p-methoxycinnamic aldehyde | 1.34E+07 | 1.24E+07 | 1.41E+07 | 1.16E+07 |
| 1-epi-cubenol | 5.76E+06 | 5.01E+06 | 5.74E+06 | 5.12E+06 |
| *Total* | *3.79E+09* | *3.59E+09* | *6.48E+09* | *5.92E+09* |

These data are also plotted in figures 1 and 2. Figure 1 depicts the concentration of volatile compounds in various cooking trials of example 3. Figure 2 depicts the concentration of the same volatile compounds, without coumarin and (E)-cinnamic aldehyde, in order to focus on the volatile compounds which have a lower concentration.

From this table 5 and figures 1 and 2 the conclusion can be drawn that the composition according to the invention comprising cinnamon contains most volatile compounds, and hence generates most flavours. In all three trials the same amount and quality of cinnamon was used, nevertheless the amount of flavour generated by the cinnamon puree was highest. It was even nearly twice as high as for the cinnamon which was used dry, as well as the cinnamon which was used in combination with the other ingredients of the puree, however not pre-prepared as a puree. This is not only valid for the major volatile compounds coumarin and (E)-cinnamic aldehyde, but also for most of the minor volatile compounds, as can be seen from table 5 and figure 2. Moreover, in spite of the late addition of the cinnamon puree in trial 3, generation of the volatile compounds in the sauce is rapid (within 10 minutes of simmering), leading to the conclusion that flavour generation in a dish is done rapidly, and long marinating of meat or vegetables is not required in order to generate a nice and attractive flavour profile.

As trial 3 was done in duplicate, both trials yielding nearly the same results, it is proven that reproducibility of the method is high. Hence the increases volatiles amount (and flavour amount and concentration of the dish prepared with the composition according to the invention as compared to trials 1 and 2, can be attributed to the use of the cinnamon puree according to the invention, and not to inaccuracies of this analysis method.

## Claims

1. A method for preparation of a composition comprising cinnamon,
wherein the composition is a water-continuous, pureed composition;
wherein the concentration of cinnamon ranges from 0.4 to 20% by weight;
and wherein the composition comprises from 0.5 to 10% by weight of insoluble fibres, wherein the insoluble fibres comprise citrus fibres or wheat fibres,
and wherein the composition comprises from 1 to 40% by weight of a vegetable oil and wherein the composition has a pH of 2 to 4,
wherein the method comprises the steps of:
(i) mixing water, food-grade acid, and cinnamon in a high shear mixer, which also has a mincing, chopping or milling function,
(ii) adding all remaining ingredients and continuing homogenisation,
(iii) filling the obtained product into a container
and wherein the temperature does not exceed 30°C during the preparation of the composition.

2. A method according to claim 1, wherein the composition comprises from 0.5% to 15% by weight of cinnamon.

3. A method according to claim 1 or 2, wherein the citrus fibres originate from lemon, orange or lime, preferably from the peel of orange, lemon or lime..

4. A method according to any one of the preceding claims, wherein the insoluble fibres have an average length of 25 to 400 micrometer.

5. A method according to any one of the preceding claims, wherein the insoluble fibres are present in the composition at a concentration from 1% to 6% by weight.

6. A method according to any one of the preceding claims, wherein the composition comprises from 1 to 15% by weight of a vegetable oil.

7. A method according to any one of the preceding claims, wherein the composition contains a food grade acid selected from citric acid, acetic acid, lactic acid, malic acid, gluconic acid, and mixtures thereof.

8. A method according to any one of the preceding claims, wherein the composition additionally comprises one or more other spices, and/or one or more herbs, and/or one or more vegetables.

9. A method according to any one of the preceding claims, wherein the composition comprises from 1 to 10% of an edible salt.

10. A method according to any one of the preceding claims, wherein the composition comprises from 1 to 10%, preferably 3 to 7% of sugar.

## Patentansprüche

1. Verfahren zum Herstellen einer Zusammensetzung, die Zimt aufweist,
wobei die Zusammensetzung eine pürierte Zusammensetzung mit Wasser als kontinuierlicher Phase ist;
wobei die Zimtkonzentration im Bereich von 0,4 bis 20 Gew.-% liegt;
und wobei die Zusammensetzung 0,5 bis 10 Gew.-% unlösliche Fasern aufweist, wobei die unlöslichen Fasern Citrusfasern oder Weizenfasern aufweisen, und wobei die Zusammensetzung 1 bis 40 Gew.-% Pflanzenöl aufweist und wobei die Zusammensetzung einen pH-Wert von 2 bis 4 hat,
wobei das Verfahren die folgenden Schritte aufweist:
(i) Mischen von Wasser, Säure mit Lebensmittelqualität und Zimt in einem Mischer mit starker Scherung, der auch eine Zerhack-, Hack- oder Mahlfunktion hat,
(ii) Zugeben aller restlichen Bestandteile und weiteres Homogenisieren,
(iii) Füllen der erhaltenen Produktes in einen Behälter,
und wobei die Temperatur während der Herstellung der Zusammensetzung 30 °C nicht übersteigt.

2. Verfahren nach Anspruch 1,
wobei die Zusammensetzung 0,5 bis 15 Gew.-% Zimt aufweist.

3. Verfahren nach Anspruch 1 oder 2,
wobei die Citrusfasern von Zitronen, Orangen oder Limetten, vorzugsweise von der Schale von Orangen, Zitronen oder Limetten stammen.

4. Verfahren nach einem der vorstehenden Ansprüche,
wobei die unlöslichen Fasern eine durchschnittliche Länge von 25 bis 400 µm aufweisen.

5. Verfahren nach einem der vorstehenden Ansprüche,
wobei die unlöslichen Fasern in einer Konzentration von 1 bis 6 Gew.-% in der Zusammensetzung vorliegen.

6. Verfahren nach einem der vorstehenden Ansprüche,
wobei die Zusammensetzung 1 bis 15 Gew.-% Pflanzenöl aufweist.

7. Verfahren nach einem der vorstehenden Ansprüche,
wobei die Zusammensetzung Säure mit Lebensmittelqualität enthält, die aus Citronensäure, Essigsäure, Milchsäure, Äpfelsäure, Gluconsäure und Gemischen davon ausgewählt ist.

8. Verfahren nach einem der vorstehenden Ansprüche,
wobei die Zusammensetzung ferner ein oder mehrere andere Gewürze und/oder ein oder mehrere Kräuter und/oder ein oder mehrere Gemüse aufweist.

9. Verfahren nach einem der vorstehenden Ansprüche,
wobei die Zusammensetzung 1 bis 10 % Speisesalz aufweist.

10. Verfahren nach einem der vorstehenden Ansprüche,
wobei die Zusammensetzung 1 bis 10 %, vorzugsweise 3 bis 7 % Zucker aufweist.

## Revendications

1. Procédé de préparation d'une composition comprenant de la cannelle,
dans lequel la composition est une composition en purée, à phase aqueuse continue ;
dans lequel la concentration de cannelle est de 0,4 à 20 % en poids ;
et dans lequel la composition comprend de 0,5 à 10 % en poids de fibres insolubles, les fibres insolubles comprenant des fibres d'agrumes ou des fibres de blé,
et dans lequel la composition comprend de 1 à 40 % en poids d'une huile végétale et dans lequel la composition a un pH de 2 à 4,
dans lequel le procédé comprend les étapes consistant à :
(i) mélanger l'eau, un acide de qualité alimentaire, et la cannelle dans un mélangeur à cisaillement élevé, qui possède également une fonction d'éminçage, de hachage ou de broyage,
(ii) ajouter tous les ingrédients restants et poursuivre l'homogénéisation,
(iii) verser le mélange obtenu dans un récipient
et dans lequel la température n'excède pas 30°C pendant la préparation de la composition.

2. Procédé selon la revendication 1, dans lequel la composition comprend de 0,5 à 15 % en poids de cannelle.

3. Procédé selon la revendication 1 ou 2, dans lequel les fibres d'agrumes proviennent du citron, de l'orange ou du citron vert, de préférence d'écorce d'orange, de citron ou de citron vert.

4. Procédé selon l'une quelconque des revendications précédentes, dans lequel les fibres insolubles ont une longueur moyenne de 25 à 400 micromètres.

5. Procédé selon l'une quelconque des revendications précédentes, dans lequel les fibres insolubles sont présentes dans la composition à une concentration de 1 à 6 % en poids.

6. Procédé selon l'une quelconque des revendications précédentes, dans lequel la composition comprend de 1 à 15 % en poids d'une huile végétale.

7. Procédé selon l'une quelconque des revendications précédentes, dans lequel la composition contient un acide de qualité alimentaire choisi parmi l'acide citrique, l'acide acétique, l'acide lactique, l'acide malique, l'acide gluconique, et leurs mélanges.

8. Procédé selon l'une quelconque des revendications précédentes, dans lequel la composition comprend en plus une ou plusieurs autres épices, et/ou une ou plusieurs herbes aromatiques, et/ou un ou plusieurs légumes.

9. Procédé selon l'une quelconque des revendications précédentes, dans lequel la composition comprend de 1 à 10 % de sel comestible.

10. Procédé selon l'une quelconque des revendications précédentes, dans lequel la composition comprend de 1 à 10 %, de préférence de 3 à 7 % de sucre.
